# EUROPÄISCHE PATENTANMELDUNG

(11) **EP 1 884 670 A2**
(43) Veröffentlichungstag der Anmeldung: **06.02.2008**
(21) Anmeldenummer: 07011079.6
(22) Anmeldetag: 06.06.2007
(51) Int. Cl.: F16C 27/06

(54) **Buchsengleitlager**

(30) Priorität: 02.08.2006 DE 102006036053
(71) Anmelder: Carl Freudenberg KG, 69469 Weinheim (DE)
(72) Erfinder: Pohl, Heiko, Dr., 21217 Seevetal (DE); Brohm, Bernd, 21255 Kakenstorf (DE); Tchernomorski, Maxim, 20535 Hamburg (DE)

(57) **Zusammenfassung**

Buchsengleitlager (1) mit radialer und axialer Elastizität aus einem lnnenkern (2,3) und einem den Innenkern umfassenden drehbeweglichen Gleitkörper (4,5), der von einem Elastomerkörper (6) und einer daran festhaftenden Hülse (7) umgeben ist, wobei der Gleitkörper aus wenigstens zwei axial nebeneinander angeordneten Gleitbuchsen (4,5) besteht.

## Beschreibung

### Technisches Gebiet

Die Erfindung befasst sich mit einem Buchsengleitlager mit radialer und axialer Elastizität aus einem Innenkern und einem den Innenkern umfassenden drehbeweglichen Gleitkörper, der von einem Elastomerkörper und einer daran festhaftenden Außenhülse umgeben ist.

### Stand der Technik

Ein Buchsengleitlager der voranstehend genannten Art ist durch die DE 101 16 053 A1 bekannt geworden. Sie dienen für wartungsfreie und elastische Lagerungen, beispielsweise für Stoßdämpfer, Filterbeine, Lenker aller Art und dergleichen, die geräuscharm große Verdrehwinkel ermöglichen. Die Befestigung des Buchsengleitlagers an den Fahrwerksteilen erfolgt über den Innenkern und die Außenhülse. Zur Verbesserung der Gleiteigenschaften ist auf der Innenseite des Gleitkörpers eine Gleitschicht vorgesehen. Das Innenrohr ist so ausgebildet, dass der Gleitkörper darauf aufgeschoben werden kann.

Eine weitere Ausführungsform eines Buchsengleitlagers zeigt die EP 0 697 298 B1. Hier ist eine Außenbuchse mit einer Gleitbuchse versehen, um eine gute Drehbeweglichkeit auf dem Innenrohr zu erreichen und außerdem sind neben dem besonders ausgebildeten Elastomerkörper an beiden axialen Lagerenden Axiallager vorgesehen. Ein solches Buchsengleitlager ist sowohl radial als auch axial elastisch.

### Darstellung der Erfindung

Der Erfindung liegt die Aufgabe zugrunde, ein Buchsengleitlager zu schaffen, das insbesondere als Fahrwerkslager einzusetzen ist und das den in der Gleitfläche auftretenden Verschleiß in radialer Richtung als auch in axialer Richtung ausgleichen kann. Hierdurch wird ein durch den Verschleiß eventuell entstehendes Spiel zwischen dem Lagerkörper und dem Gleitkörper weitgehend vermieden. Dieses führt zu einer erhöhten Betriebsfestigkeit des Fahrwerkslagers und Geräusche werden vermieden.

Die Lösung der gestellten Aufgabe erfolgt mit den Merkmalen des Anspruchs 1. Die Unteransprüche 2 bis 9 stellen vorteilhafte Weiterbildungen des Erfindungsgegenstands dar.

Das Buchsengleitlager der eingangs genannten Art wird gemäß der Erfindung aus einem Gleitkörper gebildet, der aus wenigstens zwei axial nebeneinander angeordneten Gleitbuchsen besteht. Diese Gleitbuchsen sind mit axialem Abstand zueinander angeordnet und der durch den Abstand gebildete radiale Schlitz wird mindestens teilweise mit Elastomermaterial ausgefüllt. Dieses Elastomermaterial ist einheitlich mit dem Elastomerkörper verbunden und besteht folglich auch aus dem gleichen Material.

Um die Gleitreibung weitgehend herabzusetzen, können zwischen den Gleitbuchsen und dem Innenkern Gleitschichten aus PTFE Kunststoffen eingesetzt werden. Zur Erleichterung der Montage ist der Innenkern aus zwei miteinander verbindbaren Einzelteilen gebildet. Diese Einzelteile des Innenkerns werden durch seitlich am Elastomerkörper angebrachte ringförmige Lappen zusammengehalten. Dadurch wird eine Vormontage des Buchsengleitlagers erreicht.

Eine besonders gute Ausbildung der Erfindung wird dann erreicht, wenn die Gleitbuchsen über ihre gesamte Länge jeweils mit einem axialen Schlitz versehen sind. Durch den Schlitz in den Gleitbuchsen können dieselben durch die Vorspannung im Elastomerkörper so zusammengedrückt werden, dass eventuell auftretende Spalte zwischen der Gleitfläche des Innenkerns und den Gleitflächen der Gleitbuchsen geschlossen werden. Um eine sichere Einbindung der Gleitbuchsen am Innenkern zu erreichen, sind die Einzelteile des Innenkerns an ihrem nach außenweisenden Enden mit die Gleitbuchsen einfassenden radialen Wülste versehen. Diese Wülste können außerdem noch zur Halterung der Einzelteile des Innenkerns herangezogen werden, indem sie von den ringförmigen Lappen des Elastomerkörpers umfasst werden.

Eine fertigungstechnisch besonders einfache Lösung ergibt sich dadurch, dass die Gleitbuchsen aus Kragenblechen bestehen, deren Kragen in eine von den Einzelteilen des Innenkerns an ihrem Zusammenstoß gebildete umlaufende Nut eingefügt sind. Dabei werden die Gleitbuchsen wiederum mit axialem Abstand zueinander angeordnet und in den durch den Abstand gebildeten Schlitz wird Elastomermaterial eingefügt. Die Kragenbleche sind mit Axialschlitzen versehen und liegen spiegelsymmetrisch mit ihren radial nach innen gerichteten Kragen Rücken an Rücken aneinander an. Durch den Elastomerkörper werden sie an die Gleitfläche des Innenkerns gedrückt,
wodurch eventuelle Spalte zwischen Gleitfläche und Kragenblechen geschlossen werden. Darüber hinaus wird auch ein eventuell auftretendes axiales Spiele ausgeglichen.

### Kurzbeschreibung der Zeichnung

Anhand der in der Zeichnung dargestellten Ausführungsbeispiele wird die Erfindung nachstehend erläutert.

Es zeigt:
- Figur 1: Das Buchsengleitlager im Längsschnitt in seinem prinzipiellen Aufbau
- Figur 2: ein Buchsengleitlager im Längsschnitt, bei dem die Gleitbuchsen aus im Rollverfahren hergestellten Kragenblechen bestehen.

### Ausführung der Erfindung

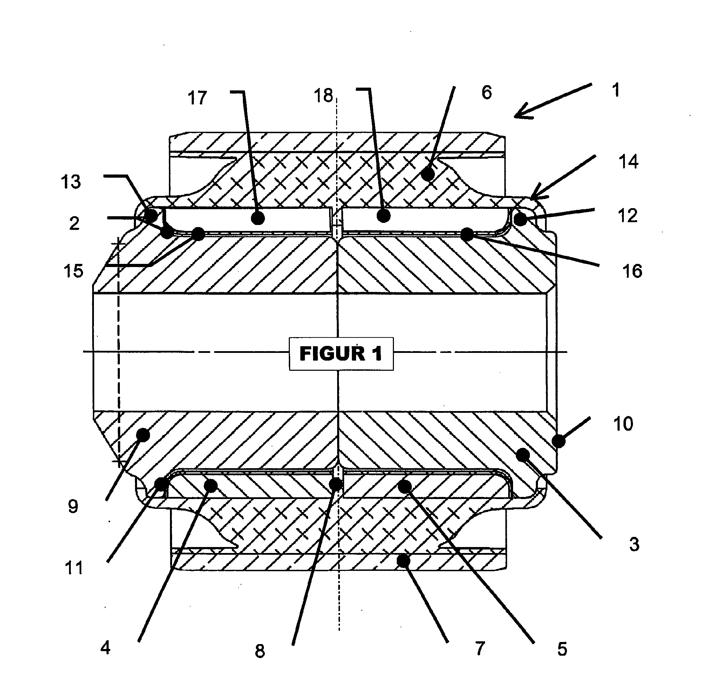

Das in der Figur 1 im Längsschnitt gezeigte Buchsengleitlager 1 besteht aus einem Innenkern aus zwei miteinander gekoppelten Einzelteilen 2 und 3, den darauf drehbar angeordneten Gleitbuchsen 4 und 5, dem Elastomerkörper 6 und der Außenhülse 7. Außenhülse 7, Elastomerkörper 6 und die Gleitkörperbuchsen 4 und 5, sind durch Vulkanisation fest miteinander verbunden. Die Gleitbuchsen 4 und 5 sind mit Abstand zueinander angeordnet, so dass zwischen ihnen ein radialer Schlitz 8 entsteht, der zumindest teilweise mit dem Elastomermaterial des Elastomerkörpers 6 ausgefüllt ist. Die Gleitbuchsen 4 und 5 sind symmetrisch ausgebildet. Sie werden auf die Einzelteile 2 und 3 aufgeschoben. Jedes Einzelteil 2 und 3 des Innenkerns hat an ihren nach außenweisenden Enden 9, 10 radiale Wülste 11, 12, welche die Gleitbuchsen 4, 5 axial einfassen. Außerdem werden die Wülste 11, 12 von den ringförmigen Lappen 13, 14 des Elastomerkörpers 6 umfasst, so dass ein vormontiertes Buchsengleitlager 1 vorliegt. Zwischen den Gleitbuchsen 4, 5 und den Einzelteilen 9, 10 des Innenkerns sind die Gleitschichten 15, 16 eingesetzt. Beide Gleitbuchsen 4, 5 sind über ihre gesamte Länge jeweils mit einem axialen Schlitz 17, 18 versehen. Diese Schlitze 17, 18 erstrecken sich auch durch die an den Gleitbuchsen 4, 5 angebrachten Gleitschichten 15 und 16 hindurch.

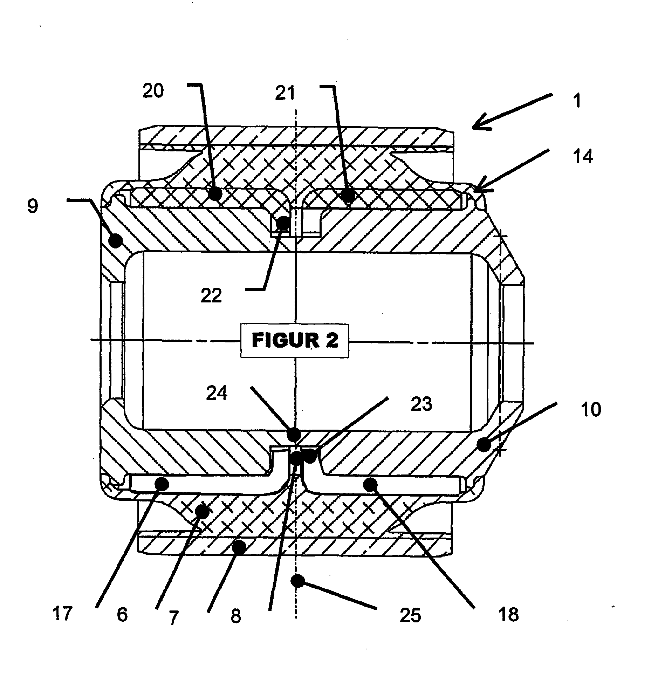

Die Figur 2 zeigt das Gleitbuchsenlager 1 mit dem prinzipiellen Aufbau wie in Figur 1. Jedoch sind in dieser Ausführung die Gleitbuchsen 4, 5 durch gerollte Kragenbleche 20, 21 hergestellt. Die Kragen 22 und 23 ragen in die Nut 24 hinein, die am Zusammenstoß 25 der Einzelteile 9 und 10 des Innenkerns gebildet ist. Zwischen den Kragen 22 und 23 ist der radiale Schlitz 8, der teilweise mit Elastomermaterial ausgefüllt ist. Das Buchsengleitlager 1 nach der Figur 2 hat ansonsten den gleichen Aufbau wie das Buchsengleitlager 1 nach der Figur 1 wenn man von der nichtsymmetrischen Ausbildung der beiden Einzelteile 9 und 10 des Innenkerns absieht.

## Patentansprüche

1. Buchsengleitlager mit radialer und axialer Elastizität aus einem Innenkern und einem den Innenkern umfassenden drehbeweglichen Gleitkörper, der von einem Elastomerkörper und einer daran festhaftenden Hülse umgeben ist, **dadurch gekennzeichnet, dass** der Gleitkörper aus wenigstens zwei axial nebeneinander angeordneten Gleitbuchsen (4, 5) besteht.

2. Buchsengleitlager nach Anspruch 1, **dadurch gekennzeichnet, dass** die Gleitbuchsen (4, 5) mit axialem Abstand zueinander angeordnet sind.

3. Buchsengleitlager nach einem der Ansprüche 1 oder 2, **dadurch gekennzeichnet, dass** der durch den Abstand gebildete radiale Schlitz (8) mindestens teilweise mit Elastomermaterial ausgefüllt ist.

4. Buchsengleitlager nach einem der Ansprüche 1 bis 3, **dadurch gekennzeichnet, dass** der Innenkern aus zwei miteinander koppelbaren Einzelteilen (2, 3) besteht.

5. Buchsengleitlager nach einem der Ansprüche 1 bis 4, **dadurch gekennzeichnet, dass** zwischen den Gleitbuchsen (4, 5) und den Einzelteilen (9, 10) des Innenkerns Gleitschichten (15, 16) aus PTFE Kunststoffen eingesetzt sind.

6. Buchsengleitlager nach Anspruch 5, **dadurch gekennzeichnet, dass** die Einzelteile (2, 3) des Innenkerns durch seitlich am Elastomerkörper (6) angebrachte ringförmige Lappen (13, 14) zusammengehalten werden.

7. Buchsengleitlager nach einem der Ansprüche 1 bis 6, **dadurch gekennzeichnet, dass** die Einzelteile (2, 3) des Innenkerns an ihren nach außen weisenden Enden (9, 10) mit die Gleitbuchsen (4, 5) einfassenden radialen Wülsten (11, 12) versehen sind, die von den ringförmigen Lappen (13, 14) des Elastomerkörpers (6) umfasst sind.

8. Buchsengleitlager nach einem der Ansprüche 1 bis 7, **dadurch gekennzeichnet, dass** die Gleitbuchen (4, 5) aus Kragenblechen (20, 21) bestehen, deren Kragen (22, 23) in eine von den Einzelteilen (,2, 3) des Innenkerns an ihrem Zusammenstoß (25) gebildete umlaufende Nut (24) eingefügt sind.

9. Buchsengleitlager nach einem der Ansprüche 1 bis 8, **dadurch gekennzeichnet, dass** die Gleitbuchsen (4, 5) über ihre gesamte Länge jeweils mit einem axialen Schlitz (17, 18) versehen sind.
